# FASCICULE DE BREVET EUROPEEN

(11) **EP 0 596 787 B1**
(45) Date de publication et mention de la délivrance du brevet: **26.02.1997**
(21) Numéro de dépôt: 93402674.1
(22) Date de dépôt: 29.10.1993
(51) Int. Cl.: F16F 13/00

(54) **Perfectionnements aux supports antivibratoires hydrauliques**
Verbesserungen für hydraulische Antivibrationslagen
Improvement for hydraulic antivibration supports

(30) Priorité: 02.11.1992 FR 9213097
(43) Date de publication de la demande: 11.05.1994
(73) Titulaire: HUTCHINSON, F-75008 Paris (FR)
(72) Inventeur: Bellamy, Alain, F-41100 Naveil (FR); Blanchet, Emmanuel, F-28200 Chateaudun (FR); Richard, Pascal, F-28200 Chateaudun (FR)
(74) Mandataire: Burbaud, Eric

(56) Documents cités:
- EP-A- 0 156 697
- EP-A- 0 346 227
- FR-A- 2 392 285
- FR-A- 2 674 590
- PATENT ABSTRACTS OF JAPAN vol. 12, no. 91 (M-679)(2938) 24 Mars 1988 & JP-A-62 228 726 (KINUGAWA) 7 Octobre 1987

## Description

L'invention concerne des dispositifs antivibratoires hydrauliques destinés à être interposés aux fins d'amortissements et de liaison, voire de support, entre deux éléments rigides tels qu'un châssis et un moteur de véhicule.

L'invention concerne plus particulièrement, parmi ces dispositifs, ceux qui comportent :
- deux armatures rigides solidarisables respectivement avec les deux éléments rigides à réunir,
- un corps en élastomère reliant entre elles les deux armatures et formant au moins en partie avec celles-ci deux chambres étanches,
- un passage étranglé faisant communiquer en permanence ces deux chambres entre elles,
- une masse de liquide remplissant les deux chambres et le passage étranglé,
- un clapet qui est une plaquette en un matériau élastiquement déformable délimitant en partie au moins l'une des deux chambres et une autre chambre qui est de préférence la seconde des deux chambres précitées, ledit clapet admettant un axe de révolution ou analogue,
- et au moins une grille limitant les débattements dudit clapet.

Comme on le sait, avec un tel dispositif, une vibration de fréquence élevée et de faible amplitude telle que celles dues au fonctionnement d'un moteur au ralenti, se traduit par une succession rapide de déformations alternatives du clapet perpendiculairement à lui-même susceptibles d'atténuer la transmission des vibrations en cause.

Au contraire, pour des oscillations d'amplitude plus élevée et de fréquence plus basse, telles que celles dues aux irrégularités et variations de déclivité du sol, lors de la circulation du véhicule sur ce sol, l'amplitude des déformations du clapet atteint sa valeur maximum possible et le liquide est refoulé de l'une des deux chambres dans l'autre et inversement à travers le passage étranglé, avec mise en résonance de la masse liquide ainsi refoulée lorsque la fréquence des oscillations atteint une valeur prédéterminée qui est fonction du rapport entre la longueur axiale et la section droite du passage étranglé. Cette mise en résonance assure l'amortissement désiré des oscillations concernées.

Les discontinuités des déplacements alternatifs du clapet et notamment celles qui sont dues aux limitations des débattements du clapet par la grille qui lui est associée, sont à l'origine de claquements et bruits parasites qui peuvent s'avérer nuisibles. C'est en particulier le cas pour les dispositifs équipant des véhicules haut de gamme dont on cherche à rendre les habitacles aussi silencieux que possible.

Un but principal de l'invention est de pallier cet inconvénient.

Il a déjà été proposé par la demanderesse dans ses brevets français n° 2 674 590 et européen n° 0 156 697 un dispositif antivibratoire du type précité, dont les faces du clapet comprennent des bossages faisant corps avec celui-ci. Ces bossages sont, lors du travail du clapet, progressivement écrasés contre les grilles limitant le débattement du clapet, puis détendus élastiquement. Plus précisément, du fait de la présence desdits bossages, le clapet ne s'applique pas de façon angulairement homogène sur les grilles, mais subit des déformations ondulées circonférenciellement : les sections du clapet de part et d'autre des bossages s'appliquent sur les portées des grilles, non d'un seul bloc, mais de façon angulairement progressive.

Dans les réalisations prévues dans lesdits brevets, le clapet est de contour circulaire et les bossages sont disposés selon des couronnes annulaires sur lesquelles ils sont répartis régulièrement.

Dans le second desdits brevets, il a été proposé, pour limiter l'amplitude des déformations de la membrane, d'évider dans les faces de cette membrane des gorges présentant normalement un profil en U, la fermeture de l'U consécutive à une déformation marquant la fin de cette déformation du fait de la butée mutuelle des deux ailes de l'U.

Certes, ces gorges définissent dans la membrane une "hétérogénéité angulairement non répétitive".

Mais comme elles sont obligatoirement étroites, lesdites gorges ne suffisent pas pour interrompre substantiellement par elles-mêmes la continuité des faces de la membrane, ni celle des déformations de ces faces et de leur application contre les grilles en regard.

La présence des bossages dans les réalisations qui viennent d'être évoquées peut conduire à une certaine atténuation des claquements et bruits parasites précités.

Des atténuations encore plus fortes desdits claquements et bruits parasites sont obtenues avec les dispositifs antivibratoires proposés par l'invention.

A cet effet, un dispositif antivibratoire selon l'invention est du genre précité, en ce sens qu'il comporte des moyens pour rendre angulairement progressive autour de l'axe l'application du clapet sur la grille lors des débattements de celui-ci, ces moyens étant constitués par une hétérogénéité angulaire non répétitive tout autour de l'axe, de l'une au moins des surfaces de la grille et du clapet qui viennent en contact mutuel lors des débattements dudit clapet. Un tel dispositif est connu du EP-A-0 156 697 où lesdits moyens sont constitués par une spirale formée dans le clapet. L'invention est caractérisé en ce que l'hétérogénéité de la surface est due à la présence d'au moins un relief en saillie par rapport à son profil général.

Dans des modes de réalisation préférés, on a recours en outre à l'une et/ou à l'autre des caractéristiques suivantes :
- l'un au moins des reliefs est constitué par un picot ou bossage,
- l'un au moins des reliefs est constitué par une nervure, notamment radiale,
- le contour de l'un au moins des reliefs s'étend sur un angle qui est au plus égal au cinquième de l'angle séparant ce contour du contour du relief le plus voisin.

La description qui suit d'un mode de réalisation particulier de l'invention est purement illustrative et non limitative. Elle doit être lue en regard des dessins annexés sur lesquels :
- la figure 1 est une vue en coupe axiale d'un support antivibratoire hydraulique conforme à ce mode de réalisation particulier ;
- les figures 2 et 3 sont des vues de dessus respectivement de chacune des grilles du dispositif de la figure 1 ;
- la figure 4 est une vue en coupe selon la ligne IV-IV de la grille de la figure 2, ainsi que du clapet et de l'autre des grilles du dispositif de la figure 1.

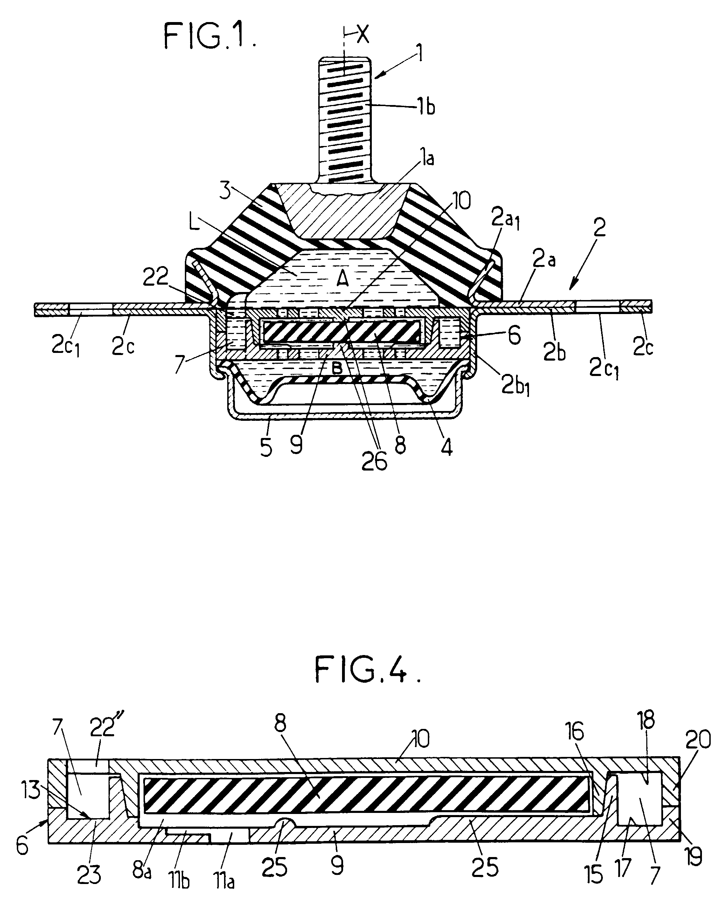

Ainsi qu'on peut plus particulièrement le voir sur la figure 1, le dispositif conforme à ce mode de réalisation comprend, de façon connue en soi :
- une embase rigide 1 comprenant un plot central la prolongé vers le haut par un goujon 1b en attente,
- un anneau rigide 2 d'axe vertical X constitué par deux plaquettes annulaires 2a, 2b, superposées, chacune conformée intérieurement avec un bord rabattu, référencé respectivement par 2a1 et 2b1, ces deux plaquettes étant prolongées vers l'extérieur pour réaliser pour l'anneau 2 deux pattes 2c diamétralement opposées, chacune de ces pattes 2c étant perforée par un trou de fixation 2c1,
- une paroi tronconique épaisse 3 d'axe X en élastomère et présentant une bonne résistance à la compression axiale, de façon à jouer un rôle de "support", cette paroi 3 reliant de façon étanche l'embase 1 à l'anneau 2, en s'évasant de ladite embase vers la plaquette 2a,
- un soufflet mince et flexible 4 relié de façon étanche à l'anneau 2, et délimitant un boîtier fermé avec cet anneau, la paroi 3 et l'embase 1,
- un capot rigide 5 pour la protection du soufflet 4, le pourtour dudit capot 5 étant fixé sur l'anneau 2,
- une cloison rigide intermédiaire 6 divisant le boîtier en deux chambres, savoir une chambre de travail A du côté de la paroi 3 et une chambre de compensation B du côté du soufflet 4,
- un passage étranglé 7 reliant les deux chambres A et B entre elles et ménagé dans le pourtour de la cloison intermédiaire 6,
- une masse de liquide L remplissant les deux chambres et le passage étranglé,
- et un clapet 8 monté entre deux grilles 9 et 10 faisant partie de la cloison intermédiaire 6 de façon telle que l'amplitude des débattements axiaux des différents points du clapet soit limitée à une valeur inférieure à 1 mm et de préférence de l'ordre de 0,5 mm, ledit clapet 8 étant une plaquette au contour circulaire en élastomère.

Le bord 2b1 entoure les bords périphérique de la paroi 6, du soufflet 4 et du capot 5. Le soufflet flexible 4 est maintenu par rapport à l'anneau 2 par serrage de sa périphérie entre le bord périphérique du capot 5 et une zone périphérique de la cloison 6. Ladite cloison 6, le soufflet 4 et le capot 5 sont à cet effet maintenus entre la grande base de la paroi tronconique 3 et le bord 2b1 par sertissage du pourtour d'extrémité du bord 2b1 sur le pourtour du capot 5.

Le bord 2a1 de la plaquette 2a définit quant à lui un contour de tronc de cône s'évasant vers sa base la plus éloignée de la partie principale de la plaquette. Ce bord 2a1 est noyé dans la grande base de la paroi tronconique épaisse 3.

Les grilles 9 et 10, ainsi que la membrane 8 sont de contours circulaires centrés sur l'axe X.

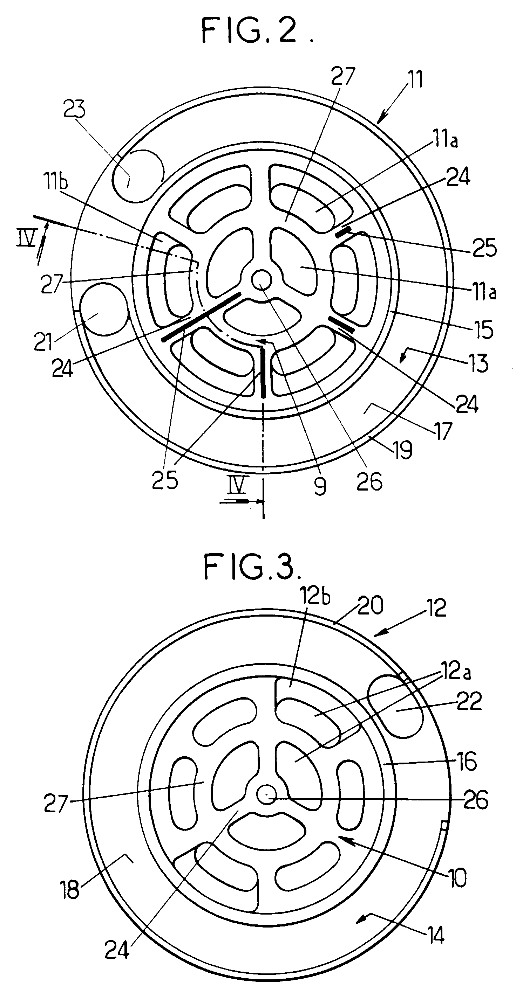

En se référant plus particulièrement aux figures 2 à 4, on voit que la cloison intermédiaire 6 est constituée principalement par deux pièces 11 et 12 complémentaires, qui sont superposées et dont les parois définissent ensemble un logement 8a pour le clapet 8, ainsi que le passage étranglé 7.

La pièce 11 est constituée de la grille 9 qui est de contour circulaire, et d'une gorge annulaire 13 entourant ladite grille 9. La gorge 13 est délimitée par une jupe intérieure 15 qui entoure cylindriquement la grille 9, par un fond 17 annulaire plat, ainsi que par une jupe 19 entourant le fond 17 à sa périphérie extérieure. La jupe intérieure 15 s'étend à partir de la grille 9 et du fond 17 sur une hauteur qui correspond sensiblement à la hauteur du logement 8a de la membrane 8. La hauteur de la jupe 19 correspond à la moitié de la hauteur du passage 7. Une ouverture 21 est ménagée à travers le fond 17 pour l'entrée-sortie du liquide d'amortissement dans le passage étranglé 7.

De façon similaire, la pièce 12 comprend une grille 10 et une gorge 14 délimitée par un fond 18 et deux jupes, l'une intérieure 16, l'autre extérieure 20. Le fond 18 est traversé par une ouverture 22 d'entrée-sortie.

La paroi extérieure de la jupe 16 et la paroi intérieure de la jupe 15 sont chacune sensiblement tronconiques et de contours complémentaires. Elles s'emboîtent l'une sur l'autre en réalisant un serrage étanche lors de l'assemblage des deux pièces 11 et 12. Les jupes 19 et 20 sont de même diamètre, leurs bords libres étant maintenus l'un sur l'autre de façon étanche par le serrage précédemment décrit que réalise le sertissage du bord 2b1.

Le passage étranglé 7 s'étend sur sensiblement tout le tour des grilles 9 et 10. La gorge 13 se termine à son extrémité angulairement la plus éloignée de l'ouverture 21 par une paroi 23 sensiblement disposée au niveau de l'ouverture 22 et réalisant entre les extrémités du passage 7 une séparation étanche. Au niveau de cette séparation 23 et de l'ouverture 22, la jupe 20 est interrompue. L'ouverture 20a ainsi ménagée sur ladite jupe 20 est de dimensions complémentaires de celles de la séparation 23, de sorte qu'à l'assemblage des pièces 11 et 12 l'une sur l'autre, cette ouverture 20a s'emboîte de façon étanche sur la séparation 23.

A travers les parois des grilles 9 et 10 sont ménagées des lumières référencées respectivement par 11a et 12a. Celles-ci sont réparties régulièrement sur les grilles 9, 10 selon deux circonférences principales. Entre ces lumières 11a et 12a s'étendent des anneaux 27 et des bras radiaux 24 de matière, qui sont les portées sur lesquelles les faces du clapet 8 viennent s'appliquer. En leurs centres, ces grilles 9 et 10 présentent chacune une protubérance 26 par laquelle la membrane 8 est pincée axialement.

L'invention concerne plus particulièrement les grilles 9 et 10 et le clapet 8.

Sur la surface des bras radiaux 24 de la grille 9 sur laquelle est destiné à venir s'appliquer le clapet 8, sont réparties des nervures radiales 25 s'étendant de la zone périphérique de la grille 9, qui reçoit le bord de la jupe 16, vers le centre de la grille. Celui des bras 24 qui est le plus proche de l'ouverture 21 porte une nervure 25 qui s'étend sensiblement jusqu'à la protubérance 26 de pincement de la grille 9. Les trois bras 24 qui lui succèdent angulairement dans un sens donné sont munis de nervures 25 dont les longueurs sont angulairement décroissantes. Les deux autres bras radiaux 24 de la grille, et notamment celui qui est le plus proche de l'ouverture 22, sont dépourvus de telles nervures 25. La grille 10 ne porte quant à elle aucune nervure. Ainsi, les nervures 25 sont réparties de façon hétérogène et non répétitive autour de l'axe.

Elles sont en outre d'une épaisseur angulaire de l'ordre du millimètre, les points les plus proches de deux nervures 25 successives étant séparés entre eux d'une distance supérieure à 10 millimètres. L'angle séparant les contours de deux nervures 25 successives est donc supérieur à dix fois l'angle selon lequel une telle nervure 25 s'étend.

Lors des déformations du clapet 8, celui-ci va s'écraser progressivement angulairement de part et d'autre des nervures 25. La disposition de ces nervures casse les symétries de débattement du clapet 8. Les phénomènes de bruits parasites et claquements dus aux discontinuités de déplacement alternatif du clapet, et notamment aux chocs dudit clapet sur ses portées radiales et annulaires, sont considérablement diminués. Cette réduction des phénomènes parasites est accentuée par le positionnement de la nervure 25 de plus grande dimension à proximité d'une entrée-sortie (ouverture 21) du passage étranglé 7, ainsi que par le fait que la grille 10 ne porte pas de nervures.

D'autres variantes de réalisation sont également possibles. Les nervures peuvent être remplacées par tout autre relief non répétitif par rapport à l'axe des grilles et du clapet, et notamment par des picots. Les picots, qui peuvent être réalisés par emboutissage des grilles, ont avantageusement la forme d'une calotte sphérique.

Les reliefs hétérogènes peuvent également être portés par le clapet, une plus grande atténuation étant obtenue avec des reliefs portés par les grilles, un relief porté par une grille réalisant, de la même façon qu'une protubérance 26, un pincement du clapet.

L'expérience montre qu'en outre il est particulièrement avantageux de prévoir le long de certaines au moins des lumières 11a, 12a des grilles, sur leurs faces disposées en regard du clapet 8, des plages en retrait 11b, 12b, ou "lamages", qui peuvent être créées par fraisage ou venir de moulage avec les grilles concernées : les discontinuités de surface qui résultent de ces zones en creux renforcent l'effet favorable dû à la présence des reliefs dissymétriques sur la réduction des "claquements".

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le clapet aurait un contour non circulaire, mais admettrait un axe analogue à un axe de révolution tel qu'un axe de répétition (c'est-à-dire tel que le contour du clapet coïncide avec lui-même après une rotation de 2π/n du clapet autour dudit axe, n étant un nombre entier), et notamment celles où le clapet aurait un contour elliptique ou rectangulaire ;
- celles où deux dispositifs d'amortissement seraient montés en parallèle, un clapet double contrôlant la communication entre les chambres de ces deux dispositifs ;
- celles où le clapet encadré par ses deux grilles serait prévu non pas sur la cloison intermédiaire 6, mais en un autre emplacement de la face interne de la chambre de travail A, et en particulier au voisinage de l'embase 1, ce clapet contrôlant alors la communication entre la chambre A et une troisième chambre (non représentée), cette troisième chambre étant également déformable et délimitée notamment à cet effet par une membrane flexible étanche dont la face extérieure à la chambre considérée délimiterait une chambre à air éventuellement garnie d'une mousse ou serait mise à l'air libre ;
- celles où le dispositif antivibratoire considéré serait un manchon travaillant essentiellement selon une direction diamétrale et pour lequel les deux armatures rigides seraient tubulaires, s'entourant l'une l'autre, et de préférence de révolution et coaxiales au moins sous charge ;
- celles où l'une des armatures constitutives du dispositif d'amortissement serait un tube qui traverse ce dispositif, le clapet étant alors une plaquette annulaire qui entoure cette armature ;
- et celles où le passage étranglé serait évidé dans d'autres portions du dispositif que le pourtour de la cloison intermédiaire, et notamment à travers la zone centrale du clapet lui-même.

## Revendications

1. Dispositif antivibratoire hydraulique destiné à être interposé entre deux éléments rigides, comportant deux armatures rigides (1, 2) solidarisables respectivement avec les deux éléments rigides à réunir, un corps en élastomère (3) reliant entre elles les deux armatures (1, 2)et formant au moins en partie avec celles-ci deux chambres étanches (A, B), un passage étranglé (7) faisant communiquer en permanence les deux chambres entre elles, une masse de liquide (L)remplissant les deux chambres (A, B) et le passage étranglé (7), un clapet (8) qui est une plaquette en un matériau élastiquement déformable délimitant en partie au moins l'une des deux chambres (A, B) et une autre chambre qui est de préférence la seconde des deux chambres précitées, ledit clapet (8) admettant un axe (X) de révolution ou analogue, au moins une grille (9, 10) limitant les débattements dudit clapet (8) et des moyens (25) pour rendre angulairement progressive autour de l'axe (X) l'application du clapet (8) sur la grille (9, 10) lors des débattements de celui-ci, ces moyens (25) étant constitués par une hétérogénéité angulaire non répétitive tout autour de l'axe (X) de l'une au moins des surfaces de la grille (9, 10) et du clapet (8) qui viennent en contact mutuel lors des débattements dudit clapet, caractérisé en ce que l'hétérogénéité de la surface est due à la présence d'au moins un relief (25) en saillie par rapport à son profil général.

2. Dispositif selon la revendication 1, caractérisé en ce que l'un au moins des reliefs est constitué par un picot ou bossage.

3. Dispositif selon la revendication 1, caractérisé en ce que l'un au moins des reliefs est constitué par une nervure (25), notamment radiale.

4. Dispositif selon l'une quelconque des précédentes revendications, caractérisé en ce que le contour de l'un au moins des reliefs (25) s'étend sur un angle au plus égal au cinquième de l'angle séparant ce contour du contour du relief (25) le plus voisin.

## Patentansprüche

1. Hydraulische Antivibrationsvorrichtung, die dazu bestimmt ist, zwischen zwei starren Elementen angeordnet zu werden, mit zwei starren Beschlägen (1, 2), die jeweils mit zwei zu vereinigenden starren Elementen verbindbar sind, einem Elastomerkörper (3), der zwischen ihnen die beiden Beschläge (1, 2) verbindet und mit ihnen wenigstens teilweise zwei dichte Kammern (A, B) bildet, einem engen Durchlaß (7), der die beiden Kammern dauerhaft miteinander verbindet, einer Flüssigkeitsmasse (L), welche die beiden Kammern (A, B) und den engen Durchlaß (7) füllt, einem Klappenventil (8), bei der es sich um eine Platte aus einem elastisch verformbaren Material handelt, die teilweise wenigstens eine der beiden Kammern (A, B) und eine weitere Kammer begrenzt, die vorzugsweise die zweite der beiden vorstehend genannten Kammern ist, wobei das Klappenventil (8) eine Drehachse (X) oder dergleichen aufweist, wenigstens ein Gitter (9, 10), welches die Verschiebevorgänge des Klappenventils (8) begrenzt, und einer Einrichtung (25), um das Anlegen der Klappe (8) auf das Gitter (9, 10) winkelmäßig zunehmend um die Achse (X) während seiner Verschiebevorgänge zu erzielen, wobei die Einrichtung (25) durch eine wiederholungsfreie Ungleichartigkeit um die gesamte Achse (X) herum von wenigstens einer der Oberflächen des Gitters (9, 10) und des Klappenventils (8) gebildet ist, die bei den Verschiebevorgängen des Klappenventils in gegenseitigen Kontakt kommen, dadurch gekennzeichnet, daß die Ungleichartigkeit der Oberfläche durch das Vorhandensein von wenigstens einer Erhöhung (25) vorliegt, die in Bezug auf ihr allgemeines Profil vorspringt.

2. Vorrichtung nach Anspruch 1, dadurch gekennzeichnet, daß wenigstens eine der Erhöhungen durch einen Spitzkeil oder eine Wulst gebildet ist.

3. Vorrichtung nach Anspruch 1, dadurch gekennzeichnet, daß wenigstens eine der Erhöhungen durch eine insbesondere radiale Rippe (25) gebildet ist.

4. Vorrichtung nach einem der vorangehenden Ansprüche, dadurch gekennzeichnet, daß die Kontur von der wenigstens einen der Erhöhungen (25) sich unter einem Winkel erstreckt, der höchstens gleich einem Fünftel des Winkels ist, der diese Kontur von der Kontur der unmittelbar benachbarten Erhöhung (25) trennt.

## Claims

1. A hydraulic anti-vibration device designed to be interterposed between two rigid elements, the device comprising two rigid frame members (1, 2) suitable for securing to respective ones of the two rigid elements to be united, an elastomer body (3) interconnecting the two frame members (1, 2) and co-operating therewith to form, at least in part, two sealed chambers (A, B), a constricted passage (7) keeping the two chambers permanently in communication with each other, a mass of liquid (L) filling the two chambers (A, B) and the constricted passage (7), a valve member (8) in the form of a plate of elastically deformable material defining in part at least one of the two chambers (A, B) and another chamber which is preferably the second of said two chambers, said valve member (8) having an axis of revolution (X) or the like, at least one grid (9, 10) limiting the displacements of said valve member (8), and means (25) for causing the valve member (8) to be pressed against the grid (9, 10) in an angularly progressive manner around the axis (X) during displacement of the valve member, said means (25) being constituted by non-repetitive angular non-uniformity all around the axis (X) in at least one of the surfaces of the grid (9, 10) and of the valve member (8) that come into mutual contact during displacements of said valve member, characterized in that the non-uniformity of the surface is due to the presence of at least one piece of relief (25) projecting relative to its general outline.

2. A device according to claim 1, characterized in that at least one of the reliefs is constituted by a stud or a buldge.

3. A device according to claim 1, characterized in that at least one of the reliefs is constituted by a rib (25), in particular a radial rib.

4. A device according to any one of the preceding claims, characterized in that the outline of at least one of the reliefs (25) extends over an angle that is no greater that one-fifth of the angle between this outline and the outline of the closest adjacent relief (25).
